(19) Europäisches Patentamt
European Patent Office
Office européen des brevets

(11) **EP 4 089 782 A1**

(12) # EUROPEAN PATENT APPLICATION
published in accordance with Art. 153(4) EPC

(43) Date of publication:
**16.11.2022 Bulletin 2022/46**

(21) Application number: **21870477.3**

(22) Date of filing: **25.03.2021**

(51) International Patent Classification (IPC):
$H01M\ 10/0525^{(2010.01)}$  $H01M\ 4/525^{(2010.01)}$
$H01M\ 4/02^{(2006.01)}$  $H01M\ 4/38^{(2006.01)}$
$H01M\ 4/48^{(2010.01)}$

(52) Cooperative Patent Classification (CPC):
**H01M 10/0525; H01M 4/386; H01M 4/483;
H01M 4/525;** H01M 2010/4292

(86) International application number:
**PCT/CN2021/083042**

(87) International publication number:
**WO 2022/198577 (29.09.2022 Gazette 2022/39)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicants:
• **Dongguan Amperex Technology Limited
Dongguan City, Guangdong Province 523000
(CN)**

• **Ningde Amperex Technology Limited
Ningde, Fujian 352100 (CN)**

(72) Inventor: **WANG, Qiang
Dongguan City
Guangdong 523000 (CN)**

(74) Representative: **Icosa
83 avenue Denfert-Rochereau
75014 Paris (FR)**

(54) **ELECTROCHEMICAL DEVICE AND ELECTRONIC DEVICE**

(57) This application provides an electrochemical device and an electronic device. The electrochemical device includes a positive electrode plate, a negative electrode plate, and a separator disposed between the positive electrode plate and the negative electrode plate. The positive electrode plate includes a positive current collector and a positive active material layer disposed on the positive current collector. The positive active material layer includes a positive active material. The positive active material includes lithium cobalt oxide. The negative electrode plate includes a negative current collector and a negative active material layer disposed on the negative current collector. The negative active material layer includes a negative active material. The electrochemical device satisfies the following relational expressions: $3 \leq 100 \times (4.5 - U) - 10 \times (CB - 1) \leq 10$, $CB = (A' \times B' \times C')/(A \times B \times C)$. By increasing the CB value of the electrochemical device and reducing the charge cutoff voltage U, the embodiments of this application reduce volume expansion of the negative active material layer during charging and discharging, prevent the rise of the positive electrode potential from adversely affecting the positive active material, and thereby improve the cycle performance of electrochemical device.

EP 4 089 782 A1

**Description**

**TECHNICAL FIELD**

This application relates to the field of electrochemical energy storage, and in particular, to an electrochemical device and an electronic device.

**BACKGROUND**

With the development and progress of electrochemical devices (such as a lithium-ion battery), higher requirements have been posed on the cycle performance and energy density of the electrochemical devices. Currently, to increase the energy density of an electrochemical device, some negative active materials of a high gram capacity (such as a silicon-based material) are generally adopted. However, as the number of cycles increases, the negative active materials of a high gram capacity incur significant volume expansion, thereby resulting in detachment and chalking of a negative active material layer and other problems, and deteriorating the cycle performance of the electrochemical device.

Therefore, how to improve the cycle performance of the electrochemical device on the basis of ensuring a high energy density of the electrochemical device is still an urgent problem to be solved.

**SUMMARY**

Some embodiments of this application provide an electrochemical device. The electrochemical device includes a positive electrode plate, a negative electrode plate, and a separator disposed between the positive electrode plate and the negative electrode plate. The positive electrode plate includes a positive current collector and a positive active material layer disposed on the positive current collector. The positive active material layer includes a positive active material. The positive active material includes lithium cobalt oxide. The negative electrode plate includes a negative current collector and a negative active material layer disposed on the negative current collector. The negative active material layer includes a negative active material. The electrochemical device satisfies the following relational expressions:

$$3 \leq 100 \times (4.5 - U) - 10 \times (CB - 1) \leq 10;$$

and

$$CB = (A' \times B' \times C')/(A \times B \times C),$$

where, A is a percentage of a mass of the positive active material in a total mass of the positive active material layer, B is a gram capacity of the positive active material and measured in mAh/g, C is a mass per unit area of the positive active material layer and measured in mg/cm$^2$, A' is a percentage of a mass of the negative active material in a total mass of the negative active material layer, B' is a gram capacity of the negative active material and measured in mAh/g, C' is a mass per unit area of the negative active material layer and measured in mg/cm$^2$, and U is a charge cutoff voltage of the electrochemical device and measured in V.

In some embodiments, $3.5 \leq 100 \times (4.5 - U) - 10 \times (CB - 1) \leq 6$. In some embodiments, $1.04 \leq CB \leq 2.0, 4.3 \leq U < 4.5$. In some embodiments, $0.17 < CB/U < 0.48$. In some embodiments, the negative active material includes at least one of SiO$_x$, silicon alloy, or a silicon-carbon composite, where $0.3 \leq x \leq 1.5$. In some embodiments, the electrochemical device further includes a conductive layer disposed between the negative current collector and the negative active material layer. The conductive layer includes a conductive agent and a binder. In some embodiments, the conductive agent includes at least one of carbon black, acetylene black, Ketjen black, graphene, carbon nanotubes, carbon fiber, or carbon nanowires.

Another embodiment of this application provides an electrochemical device. The electrochemical device includes a positive electrode plate, a negative electrode plate, and a separator disposed between the positive electrode plate and the negative electrode plate. The positive electrode plate includes a positive current collector and a positive active material layer disposed on the positive current collector. The positive active material layer includes a positive active material. The positive active material includes at least one of lithium nickel cobalt manganese oxide or lithium nickel cobalt aluminum oxide. The negative electrode plate includes a negative current collector and a negative active material layer disposed on the negative current collector. The negative active material layer includes a negative active material. The electrochemical device satisfies the following relational expressions:

$$4 \le 100 \times (4.49 - U) - 10 \times (CB - 1) \le 22;$$

and

$$CB = (A' \times B' \times C')/(A \times B \times C),$$

where, A is a percentage of a mass of the positive active material in a total mass of the positive active material layer, B is a gram capacity of the positive active material and measured in mAh/g, C is a mass per unit area of the positive active material layer and measured in mg/cm$^2$, A' is a percentage of a mass of the negative active material in a total mass of the negative active material layer, B' is a gram capacity of the negative active material and measured in mAh/g, C' is a mass per unit area of the negative active material layer and measured in mg/cm$^2$, and U is a charge cutoff voltage of the electrochemical device and measured in V.

In some embodiments, $5 \le 100 \times (4.49 - U) - 10 \times (CB - 1) \le 13$. In some embodiments, $1.04 \le CB \le 2.0, 4.1 \le U < 4.49$. In some embodiments, $0.17 < CB/U < 0.48$. In some embodiments, the negative active material includes at least one of SiO$_x$, silicon alloy, or a silicon-carbon composite, where $0.3 \le x \le 1.5$. In some embodiments, the electrochemical device further includes a conductive layer disposed between the negative current collector and the negative active material layer. The conductive layer includes a conductive agent and a binder. In some embodiments, the conductive agent includes at least one of carbon black, acetylene black, Ketjen black, graphene, carbon nanotubes, carbon fiber, or carbon nanowires.

An embodiment of this application further provides an electronic device, including the electrochemical device.

In the embodiments of this application, it is satisfied that $3 \le 100 \times (4.5 - U) - 10 \times (CB - 1) \le 10$, where CB = (A' × B' × C')/(A × B × C). In this way, the CB value of the electrochemical device is increased on the one hand, and the charge cutoff voltage U of the electrochemical device is reduced on the other hand, thereby reducing volume expansion of the negative active material layer during charging and discharging, preventing the rise of the positive electrode potential from adversely affecting the positive active material, and improving the cycle performance of electrochemical device.

## DETAILED DESCRIPTION OF EMBODIMENTS

The following embodiments enable a person skilled in the art to understand this application more comprehensively, but without limiting this application in any way.

Some embodiments of this application provide an electrochemical device. The electrochemical device includes an electrode assembly. The electrode assembly includes a positive electrode plate, a negative electrode plate, and a separator disposed between the positive electrode plate and the negative electrode plate. In some embodiments, the positive electrode plate includes a positive current collector and a positive active material layer disposed on the positive current collector. In some embodiments, the positive active material layer may be disposed on one side or both sides of the positive current collector. In some embodiments, the positive active material layer includes a positive active material. The positive active material includes lithium cobalt oxide. In some embodiments, the negative electrode plate includes a negative current collector and a negative active material layer disposed on the negative current collector. In some embodiments, the negative active material layer may be disposed on one side or both sides of the negative current collector. In some embodiments, the negative active material layer includes a negative active material.

In some embodiments, the electrochemical device satisfies the following relational expressions:

$$3 \le 100 \times (4.5 - U) - 10 \times (CB - 1) \le 10;$$

and

$$CB = (A' \times B' \times C')/(A \times B \times C),$$

where, A is a percentage of a mass of the positive active material in a total mass of the positive active material layer, B is a gram capacity of the positive active material and measured in mAh/g, C is a mass per unit area of the positive active material layer and measured in mg/cm$^2$, A' is a percentage of a mass of the negative active material in a total mass of the negative active material layer, B' is a gram capacity of the negative active material and measured in mAh/g, C' is a mass per unit area of the negative active material layer and measured in mg/cm$^2$, and U is a charge cutoff voltage of the electrochemical device and measured in V. As can be seen from above, CB is a ratio of a discharge capacity per unit area of the negative electrode to a discharge capacity per unit area of the positive electrode. The CB value can be adjusted by changing the value of any one of the parameters A, B, C, A', B', or C'.

In some embodiments, by controlling the charge cutoff voltage U of the electrochemical device and the ratio (CB) of the discharge capacity per unit area of the negative electrode to the discharge capacity per unit area of the positive electrode, it is achieved that $3 \leq 100 \times (4.5 - U) - 10 \times (CB - 1) \leq 10$, thereby reducing the volume expansion of the negative active material layer during the charging and discharging, and improving the cycle performance of the electrochemical device. In some embodiments, $3.5 \leq 100 \times (4.5 - U) - 10 \times (CB - 1) \leq 6$.

In some embodiments, $1.04 \leq CB \leq 2.0$. If CB is too small, lithium plating is prone to occur on a surface of the negative active material layer. If CB is too large, the capacity of the negative electrode is wasted, and the energy density of the electrochemical device is reduced. In addition, when $1.04 \leq CB \leq 2.0$, the increase of CB is more conducive to suppressing the volume expansion of the negative active material during cycling and alleviating disruption caused by the volume expansion to a solid electrolyte interface (SEI) film, thereby improving the cycle performance of the electrochemical device.

In some embodiments, when the positive active material of the electrochemical device is lithium cobalt oxide, the charge cutoff voltage of the electrochemical device falls within $4.3 \leq U < 4.5$. As the CB value of the electrochemical device increases, the lithium intercalation depth of the negative active material layer in the fully charged state decreases, and an absolute potential of the negative electrode (potential vs Li/Li$^+$) rises inevitably. A full-battery voltage of the electrochemical device (such as a lithium-ion battery) is a difference between the absolute potential of the positive electrode (potential vs Li/Li$^+$) and the absolute potential of the negative electrode. Therefore, if the full-battery voltage keeps unchanged in this case, keeping the full-battery voltage unchanged in a case of the increased absolute potential of the negative electrode means inevitable increase of the absolute potential of the positive electrode. Under high-voltage conditions, the positive active material is prone to irreversible transition from a spinel phase to a rock salt phase, thereby deteriorating the structural stability of a surface phase and a bulk phase of the positive active material, aggravating side reactions between the positive active material and an electrolytic solution, and deteriorating the cycle performance of the electrochemical device. Therefore, at the same time of increasing the CB value of the electrochemical device, this application reduces the charge cutoff voltage of the electrochemical device in a fully charged state to avoid performance deterioration of the positive active material under a high voltage. Therefore, the charge cutoff voltage of the electrochemical device is set to a value greater than or equal to 4.3 V and less than 4.5 V. The principles of reducing the charge cutoff voltage U of the electrochemical device are: The absolute potential of the negative electrode rises with the increase of the CB value of the electrochemical device. In this case, the charge cutoff voltage U is reduced, so that the absolute potential of the positive electrode is increased to an extent less than the extent of the absolute potential of the positive electrode increased in a case of keeping the charge cutoff voltage of the electrochemical device unchanged, or so that the absolute potential of the positive electrode is kept basically unchanged. This maintains the stability of the positive active material without aggravating the side reactions between the positive active material and the electrolytic solution, and eliminates the adverse effect caused to the cycle performance of the electrochemical device by the increase of the absolute potential of the positive electrode in a case that the charge cutoff voltage of the electrochemical device does not decrease. However, if the charge cutoff voltage U of the electrochemical device is too low, for example, lower than 4.3 V, the energy density of the electrochemical device will be adversely affected. In some embodiments, lithium cobalt oxide as the positive active material may be coated or doped.

In some embodiments, $0.17 < CB/U < 0.48$. By increasing the CB value of the electrochemical device and also reducing the charge cut-off voltage U, it is achieved that $0.17 < CB/U < 0.48$. This can suppress the volume expansion of the negative active material during cycling, avoid deterioration of the electrochemical performance of the positive active material caused by a too high absolute potential of the positive electrode, and enhance the cycle performance of the electrochemical device.

In some embodiments, the negative active material may include at least one of SiO$_x$, silicon alloy, or a silicon-carbon composite, where $0.3 \leq x \leq 1.5$. Due to a high gram capacity of silicon, the silicon-containing material adopted above can increase the energy density of the electrochemical device. In some embodiments, the negative active material layer may further include a conductive agent and a binder. In some embodiments, the conductive agent in the negative active material layer may include at least one of conductive carbon black, Ketjen black, graphite flakes, graphene, carbon nanotubes, or carbon fiber. In some embodiments, the binder in the negative active material layer may include at least one of carboxymethyl cellulose (CMC), polyacrylic acid, polyvinylpyrrolidone, polyaniline, polyimide, polyamideimide, polysiloxane, styrene butadiene rubber, epoxy resin, polyester resin, polyurethane resin, or polyfluorene. In some embodiments, a mass ratio between the negative active material, the conductive agent, and the binder in the negative active material layer may be (80 to 99): (0.1 to 10): (0.1 to 10). Understandably, what is enumerated above is merely an example, and any other appropriate material and mass ratio may apply. In some embodiments, the current collector of the negative electrode plate may be at least one of a copper foil, a nickel foil, or a carbon-based current collector.

In some embodiments, the electrochemical device further includes a conductive layer disposed between the negative current collector and the negative active material layer. The conductive layer includes a conductive agent and a binder. The conductive layer disposed between the negative current collector and the negative active material layer is configured to improve the binding force between the negative current collector and the negative active material layer, and prevent detachment of the negative active material layer caused by the volume expansion of the negative active material during cycling.

In some embodiments, the conductive agent in the conductive layer may include at least one of carbon black, Ketjen black, acetylene black, graphene, carbon nanotubes, carbon fiber, or carbon nanowires. In some embodiments, the binder in the conductive layer may include at least one of polyacrylic acid, polyacrylic acid sodium salt (sodium polyacrylate, calcium polyacrylate, and the like), polymethacrylic acid, polyacrylamide, polymethacrylamide, polymethacrylate, polyvinyl alcohol, or sodium alginate. In some embodiments, a weight-average molecular weight of the binder in the conductive layer is 10,000 to 500,000. The weight-average molecular weight of the binder is set to 10,000 to 500,000 to ensure that the binder is anchored as an anionic dispersant to residual functional groups (such as carboxyl group, hydroxyl group, and phenol group) on the particle surface of the conductive agent, thereby implementing effective dispersion of the conductive agent. If the weight-average molecular weight of the binder is too high, for example, higher than 500,000, the effective dispersion of the conductive agent is adversely affected. In some embodiments, based on a total mass of the conductive layer, a mass percent of the binder is 10% to 48%. If the mass percent of the binder is too low, the bonding performance of the conductive layer is not fully exerted. If the mass percent of the binder is too high, the conductive performance of the conductive layer will be adversely affected.

In some embodiments, the positive active material layer may further include a conductive agent. In some embodiments, the conductive agent in the positive active material layer may include at least one of conductive carbon black, Ketjen black, graphite flakes, graphene, carbon nanotubes, or carbon fiber. In some embodiments, the positive active material layer may further include a binder. The binder in the positive active material layer may include at least one of carboxymethyl cellulose (CMC), polyacrylic acid, polyvinylpyrrolidone, polyaniline, polyimide, polyamideimide, polysiloxane, styrene butadiene rubber, epoxy resin, polyester resin, polyurethane resin, or polyfluorene. In some embodiments, a mass ratio of the positive active material, the conductive agent, and the binder in the positive active material layer may be (80 to 99): (0.1 to 10): (0.1 to 10). In some embodiments, the thickness of the positive active material layer may be 10 $\mu$m to 500 $\mu$m. Understandably, what is described above is merely an example, and the positive active material layer of the positive electrode plate may adopt any other appropriate material, thickness, and mass ratio.

In some embodiments, the current collector of the positive electrode plate may be an aluminum foil, or may be another current collector commonly used in the art. In some embodiments, the thickness of the current collector of the positive electrode plate may be 1 $\mu$m to 50 $\mu$m. In some embodiments, the positive active material layer may be coated on merely a partial region of the positive current collector of the positive electrode plate.

What is discussed above is an embodiment in which the positive active material is lithium cobalt oxide. In some other embodiments, the positive active material includes at least one of lithium nickel cobalt manganese oxide or lithium nickel cobalt aluminum oxide. Due to a different material structure, the lithium nickel cobalt manganese oxide and the lithium nickel cobalt aluminum oxide bring some changes to the applicable charge cutoff voltage U. As a ternary material, the lithium nickel cobalt manganese oxide or lithium nickel cobalt aluminum oxide allows a wider range of U. The following discusses just the differences caused by the change in the positive active material. For other parts, refer to the embodiment in which the positive active material is lithium cobalt oxide.

In some embodiments, the positive active material includes at least one of lithium nickel cobalt manganese oxide or lithium nickel cobalt aluminum oxide, and $4 \leq 100 \times (4.49 - U) - 10 \times (CB - 1) \leq 22$. As is the same with the case in which the lithium cobalt oxide is used as the positive active material, by making $4 \leq 100 \times (4.49 - U) - 10 \times (CB - 1) \leq 22$, the volume expansion of the negative active material layer during the charging and discharging is reduced, and the cycle performance of the electrochemical device is thereby improved. In some embodiments, $5 \leq 100 \times (4.49 - U) - 10 \times (CB - 1) \leq 13$. In some embodiments, $4.1 \leq U < 4.49$. At the same time of increasing the CB value of the electrochemical device, this application reduces the charge cutoff voltage of the electrochemical device in a fully charged state to avoid performance deterioration of the positive active material under a high voltage. Therefore, when the positive active material is at least one of lithium nickel cobalt manganese oxide or lithium nickel cobalt aluminum oxide, the charge cutoff voltage of the electrochemical device is set to a value greater than or equal to 4.1 V and less than 4.49 V. The principles of reducing the charge cutoff voltage U of the electrochemical device are: The absolute potential of the negative electrode rises with the increase of the CB value of the electrochemical device. In this case, the charge cutoff voltage U is reduced, so that the absolute potential of the positive electrode is increased to an extent less than the extent of the absolute potential of the positive electrode increased in a case of keeping the charge cutoff voltage of the electrochemical device unchanged, or so that the absolute potential of the positive electrode is kept basically unchanged. This maintains the stability of the positive active material without aggravating the side reactions between the positive active material and the electrolytic solution, and eliminates the adverse effect caused to the cycle performance of the electrochemical device by the increase of the absolute potential of the positive electrode in a case that the charge cutoff voltage of the electrochemical device does not decrease. However, if the charge cutoff voltage U of the electrochemical device is too low, for example, lower than 4.1 V, the energy density of the electrochemical device will be adversely affected. In some embodiments, the lithium nickel cobalt manganese oxide and the lithium nickel cobalt aluminum oxide may be coated or doped.

In some embodiments, the separator includes at least one of polyethylene, polypropylene, polyvinylidene fluoride, polyethylene terephthalate, polyimide, or aramid fiber. For example, the polyethylene includes at least one of high-density polyethylene, low-density polyethylene, or ultra-high-molecular-weight polyethylene. Especially the polyethylene and the polypropylene are highly effective in preventing short circuits, and improve stability of the battery through a turn-off effect. In some embodiments, the thickness of the separator is within a range of approximately 2 $\mu$m to 100 $\mu$m.

In some embodiments, a porous layer may be further included in a surface of the separator. The porous layer is disposed on at least one surface of a substrate of the separator. The porous layer includes inorganic particles and a binder. The inorganic particles includes at least one of aluminum oxide ($Al_2O_3$), silicon oxide ($SiO_2$), magnesium oxide (MgO), titanium oxide ($TiO_2$), hafnium dioxide ($HfO_2$), tin oxide ($SnO_2$), ceria ($CeO_2$), nickel oxide (NiO), zinc oxide (ZnO), calcium oxide (CaO), zirconium oxide ($ZrO_2$), yttrium oxide ($Y_2O_3$), silicon carbide (SiC), boehmite, aluminum hydroxide, magnesium hydroxide, calcium hydroxide, or barium sulfate. In some embodiments, a diameter of a pore of the separator is within a range of approximately 0.01 $\mu$m to 5 $\mu$m. The binder in the porous layer is at least one selected from polyvinylidene difluoride, a vinylidene difluoride-hexafluoropropylene copolymer, a polyamide, polyacrylonitrile, polyacrylic ester, polyacrylic acid, sodium polyacrylate, sodium carboxymethyl cellulose, polyvinylpyrrolidone, polyvinyl ether, poly methyl methacrylate, polytetrafluoroethylene, or polyhexafluoropropylene. The porous layer on the surface of the separator can improve heat resistance, oxidation resistance, and electrolyte infiltration performance of the separator, and enhance adhesion between the separator and the electrode plate.

In some embodiments of this application, the electrode assembly of the electrochemical device is a jelly-roll electrode assembly, a stacked electrode assembly, or a folded electrode assembly. In some embodiments, the positive electrode plate and/or negative electrode plate of the electrochemical device may be a multi-layer structure formed by winding or stacking, or may be a single-layer structure formed by stacking a single layer of positive electrode plate, a separator, and a single layer of negative electrode plate.

In some embodiments, the electrochemical device may be, but is not limited to, a lithium-ion battery. In some embodiments, the electrochemical device may further include an electrolyte. The electrolyte may be one or more of a gel electrolyte, a solid-state electrolyte, and an electrolytic solution. The electrolytic solution includes a lithium salt and a nonaqueous solvent. The lithium salt is one or more selected from $LiPF_6$, $LiBF_4$, $LiAsF_6$, $LiClO_4$, $LiB(C_6H_5)_4$, $LiCH_3SO_3$, $LiCF_3SO_3$, $LiN(SO_2CF_3)_2$, $LiC(SO_2CF_3)_3$, LiSiF6, LiBOB, or lithium difluoroborate. For example, the lithium salt is LiPF6 because it is of a high ionic conductivity and can improve cycle characteristics.

The nonaqueous solvent may be a carbonate compound, a carboxylate compound, an ether compound, another organic solvent, or any combination thereof.

The carbonate compound may be a chain carbonate compound, a cyclic carbonate compound, a fluorocarbonate compound, or any combination thereof.

Examples of the chain carbonate compound are diethyl carbonate (DEC), dimethyl carbonate (DMC), dipropyl carbonate (DPC), methyl propyl carbonate (MPC), ethylene propyl carbonate (EPC), ethyl methyl carbonate (EMC), or any combination thereof. Examples of the cyclic carbonate compound are ethylene carbonate (EC), propylene carbonate (PC), butylene carbonate (BC), vinyl ethylene carbonate (VEC), or any combination thereof. Examples of the fluorocarbonate compound are fluoroethylene carbonate (FEC), 1, 2-difluoroethylene carbonate, 1,1-difluoroethylene carbonate, 1,1,2-trifluoroethylene carbonate, 1,1,2,2-tetrafluoroethylene carbonate, 1-fluoro-2-methyl ethylene, 1-fluoro-1-methyl ethylene carbonate, 1,2-difluoro-1-methyl ethylene carbonate, 1,1,2-trifluoro-2-methyl ethylene carbonate, trifluoromethyl ethylene carbonate, or any combination thereof.

Examples of the carboxylate compound are methyl acetate, ethyl acetate, n-propyl acetate, tert-butyl acetate, methyl propionate, ethyl propionate, propyl propionate, $\gamma$-butyrolactone, decanolactone, valerolactone, mevalonolactone, caprolactone, methyl formate, or any combination thereof.

Examples of the ether compound are dibutyl ether, tetraglyme, diglyme, 1,2-dimethoxyethane, 1,2-diethoxyethane, ethoxy-methoxyethane, 2-methyltetrahydrofuran, tetrahydrofuran, or any combination thereof.

Examples of the other organic solvent are dimethyl sulfoxide, 1,2-dioxolane, sulfolane, methyl sulfolane, 1,3-dimethyl-2-imidazolidinone, N-methyl-2-pyrrolidone, formamide, dimethylformamide, acetonitrile, trimethyl phosphate, triethyl phosphate, trioctyl phosphate, phosphate ester, or any combination thereof.

In some embodiments of this application, using a lithium-ion battery as an example, the lithium-ion battery is prepared by: winding or stacking the positive electrode plate, the separator, and the negative electrode plate sequentially into an electrode assembly, putting the electrode assembly into a package such as an aluminum plastic film ready for sealing, injecting an electrolytic solution, and performing chemical formation and sealing; Then a performance test is performed on the prepared lithium-ion battery.

A person skilled in the art understands that the method for preparing the electrochemical device (for example, the lithium-ion battery) described above is merely an example. To the extent not departing from the content disclosed herein, other methods commonly used in the art may be used.

An embodiment of this application further provides an electronic device containing the electrochemical device. The electronic device according to the embodiments of this application is not particularly limited, and may be any electronic device known in the prior art. In some embodiments, the electronic device may include, but is not limited to, a notebook computer, a pen-inputting computer, a mobile computer, an e-book player, a portable phone, a portable fax machine, a portable photocopier, a portable printer, a stereo headset, a video recorder, a liquid crystal display television set, a handheld cleaner, a portable CD player, a mini CD-ROM, a transceiver, an electronic notepad, a calculator, a memory card, a portable voice recorder, a radio, a backup power supply, a motor, a car, a motorcycle, a powerassisted bicycle, a bicycle, a lighting appliance, a toy, a game machine, a watch, an electric tool, a flashlight, a camera, a large household battery, a lithium-ion capacitor, and the like.

Some specific embodiments and comparative embodiments are enumerated below to give a clearer description of this application, using a lithium-ion battery as an example.

**Embodiment 1**

Preparing a positive electrode plate: Using aluminum foil as a positive current collector, and dissolving lithium cobalt oxide (gram capacity: 176 mAh/g) as a positive active material, conductive carbon black as a conductive agent, and polyacrylic acid as a binder at a mass ratio of 97.6: 1.1: 1.3 in an N-methylpyrrolidone (NMP) solution to form a positive slurry. Coating the positive current collector with the positive slurry, and performing drying, cold pressing, and cutting to obtain a positive electrode plate coated with a positive active material layer in an amount of 19.865 mg/cm$^2$ per unit area. The compacted density of the positive electrode plate in the cold pressing process is 4.15 g/cm$^3$.

Preparing a negative electrode plate: Dissolving silicon suboxide (gram capacity: 1545 mAh/g), acrylic resin, conductive carbon black, single-walled carbon nanotubes, and sodium carboxymethyl cellulose at a mass ratio of 88.3: 9: 1.5: 0.2: 1.0 in deionized water to form a negative slurry. Using copper foil as a negative current collector, coating the negative current collector with the negative slurry, and performing drying, cold pressing, and cutting to obtain a negative electrode plate coated with a negative active material layer in an amount of 3.252 mg/mm$^2$ per unit area.

Preparing a separator: Using 9 $\mu$m-thick polyethylene (PE) as a substrate of the separator, coating both sides of the substrate of the separator with a 2 $\mu$m-thick aluminum oxide ceramic layer. Finally, coating polyvinylidene difluoride (PVDF) as a binder in an amount of 2.5 mg/cm$^2$ onto both sides that have been coated with the ceramic layer, and performing drying.

Preparing an electrolytic solution: Adding LiPF6 into a nonaqueous organic solvent in an environment in which a water content is less than 10 ppm, where the mass ratio of the nonaqueous organic solvent is ethylene carbonate (EC): diethyl carbonate (DEC): propylene carbonate (PC): propyl propionate (PP): vinylene carbonate (VC) = 20: 30: 20: 28: 2, and mixing the solution evenly to obtain an electrolytic solution. The mass percent of the LiPF6 in the electrolytic solution is 8%.

Preparing a lithium-ion battery: stacking the positive electrode plate, the separator, and the negative electrode plate sequentially so that the separator is located between the positive electrode plate and the negative electrode plate to serve a function of separation, and winding the stacked materials to obtain an electrode assembly; Putting the electrode assembly in an aluminum plastic film that serves as an outer package, dehydrating the electrode assembly under 80 °C, injecting the electrolytic solution, and performing sealing; and performing steps such as chemical formation, degassing, and edge trimming to obtain a lithium-ion battery.

The steps in other embodiments and comparative embodiments are the same as those in Embodiment 1 except changed parameter values. Specific changed parameter values are shown in the following table.

The following describes the testing method of each parameter in this application.

Testing the cycle performance:

Leaving a lithium-ion battery to stand in a 25 °C $\pm$ 2 °C thermostat for 2 hours, then charging the battery at a 0.5 C rate until the voltage reaches 4.25 V (the voltage value is the charge cutoff voltage in each embodiment), and then charging the battery at a constant voltage of 4.25 V (the voltage value is the charge cutoff voltage in each embodiment) until the current reaches 0.05 C, and then leaving the battery to stand for 15 minutes. Subsequently, discharging the battery at a 0.5 C rate until the voltage reaches 3.0 V, and then leaving the battery to stand for 5 minutes, thereby completing a charge and discharge cycle. Repeating the charge and discharge cycle on the battery, with a first-cycle discharge capacity retention rate of 100%. The cycle performance of the lithium-ion battery is indicated by a ratio of the discharge capacity at the end of each cycle to the first-cycle discharge capacity. Letting an initial thickness expansion rate of the battery be 0%, the cycle expansion rate of the lithium-ion battery is indicated by a ratio of a full-charge thickness of the battery at the end of 500 cycles to an initial thickness of the lithium-ion battery.

Table 1 shows parameters and evaluation results in Embodiments 1 to 5 and Comparative Embodiment 1. The mass per unit area and the charge cut-off voltage of the negative active material layer in Embodiments 1 to 5 differ from those in Comparative Embodiment 1.

**Table 1**

| | Negative active material | Mass percent of silicon material in negative active material | Mass per unit area of positive active material layer (mg/cm$^2$) | Mass per unit area of negative active material layer (mg/cm$^2$) | CB | Charge cutoff voltage U (V) | Relational expression 1 $100*(4.5-U)-10*(CB-1)$ | Relational expression 2: CB/U | 500th-cycle capacity retention rate | 500th-cycle expansion rate |
|---|---|---|---|---|---|---|---|---|---|---|
| Comparative Embodiment 1 | SiO | 100% | 19.865 | 3.252 | 1.3 | 4.25 | 22 | 0.25 | 60% | 14% |
| Embodiment 1 | SiO | 100% | 19.865 | 3.752 | 1.5 | 4.42 | 3 | 0.34 | 84% | 12% |
| Embodiment 2 | SiO | 100% | 19.865 | 3.752 | 1.5 | 4.4 | 5 | 0.34 | 85% | 11% |
| Embodiment 3 | SiO | 100% | 19.865 | 4.628 | 1.85 | 4.36 | 5.5 | 0.42 | 90% | 9% |
| Embodiment 4 | SiO | 100% | 19.865 | 3.752 | 1.5 | 4.36 | 9 | 0.34 | 91% | 8% |
| Embodiment 5 | SiO | 100% | 19.865 | 4.628 | 1.85 | 4.315 | 10 | 0.43 | 93% | 7% |

**EP 4 089 782 A1**

As can be seen from comparison between Embodiments 1 to 5 and Comparative Embodiment 1, in the case of $3 \leq 100 \times (4.5 - U) - 10 \times (CB - 1) \leq 10$, in contrast with the case of $100 \times (4.5 - U) - 10 \times (CB - 1) = 22$, the cycle capacity retention rate of the lithium-ion battery increases significantly, and the cycle expansion rate of the lithium-ion battery decreases significantly. In addition, as $100 \times (4.5 - U) - 10 \times (CB - 1)$ increases, or as the charge cutoff voltage decreases, the cycle capacity retention rate of the lithium-ion battery shows a tendency to increase, and the cycle expansion rate of the lithium-ion battery shows a tendency to decrease.

Table 2 shows parameters and evaluation results in Embodiments 6 to 12. In Embodiments 6 to 7, the negative active material is a mechanically mixed specimen that combines SiO of 20% by mass and graphite of 80% by mass, with an overall gram capacity of 593 mAh/g. In Embodiments 8 to 9, the negative active material is a mechanically mixed specimen that combines SiO of 60% by mass and graphite of 40% by mass, with an overall gram capacity of 1069 mAh/g. In Embodiments 10 to 12, the negative active material is a mechanically mixed specimen that combines SiO of 80% by mass and graphite of 20% by mass, with an overall gram capacity of 1307 mAh/g.

**Table 2**

| | Negative active material | Mass percent of silicon material in negative active material | Mass per unit area of positive active material layer (mg/cm$^2$) | Mass per unit area of negative active material layer (mg/cm$^2$) | CB | Charge cutoff voltage U (V) | Relational expression 1 100*(4.5-U)-10*(CB-1) | Relational expression 2: CB/U | 500th-cycle capacity retention rate | 500th-cycle expansion rate |
|---|---|---|---|---|---|---|---|---|---|---|
| Embodiment 6 | SiO+graphite | 20% | 19.865 | 7.169 | 1.1 | 4.45 | 4.0 | 0.25 | 70% | 11.5% |
| Embodiment 7 | SiO+graphite | 20% | 19.865 | 8.473 | 1.3 | 4.42 | 5.0 | 0.29 | 80% | 9% |
| Embodiment 8 | SiO+graphite | 60% | 19.865 | 3.977 | 1.1 | 4.45 | 4.0 | 0.25 | 65% | 12% |
| Embodiment 9 | SiO+graphite | 60% | 19.865 | 4.700 | 1.3 | 4.42 | 5.0 | 0.29 | 80% | 10.5% |
| Embodiment 10 | SiO+graphite | 80% | 19.865 | 3.252 | 1.1 | 4.45 | 4.0 | 0.25 | 65% | 13% |
| Embodiment 11 | SiO+graphite | 80% | 19.865 | 3.844 | 1.3 | 4.42 | 5.0 | 0.29 | 75% | 11.5% |
| Embodiment 12 | SiO+graphite | 80% | 19.865 | 4.435 | 1.5 | 4.4 | 5.0 | 0.34 | 80% | 10% |

As can be seen from comparison between Embodiments 6 to 12, the CB value is adjusted by changing the mass per unit area of the negative active material layer and the gram capacity of the negative active material. As can be seen from comparison between Embodiments 6 and 7, when the CB value is increased and the charge cutoff voltage U is decreased, the cycle capacity retention rate of the lithium-ion battery is increased, and the cycle expansion rate is decreased. The same results can be obtained by comparing Embodiments 7 and 8 and Embodiments 9 to 12.

In addition, as can be seen from comparison between Embodiments 6, 9, and 12, when the mass percent of the silicon material in the negative active material increases but the CB increases and the charge cutoff voltage U decreases, the cycle expansion rate of the lithium-ion battery yet decreases and the cycle capacity retention rate of the lithium-ion battery increases to some extent.

Table 3 shows parameters and evaluation results in Embodiments 13 to 15. In Embodiments 13 to 15, the negative active material is a mechanically mixed specimen that combines SiC of 80% by mass and graphite of 20% by mass, with an overall gram capacity of 1495 mAh/g. The mass per unit area of the negative active material layer in Embodiments 13 to 15 is different from that in Embodiment 1, and the CB and U in Embodiments 13 and 15 are different from those in Embodiment 1.

**Table 3**

| | Negative active material | Mass percent of silicon material in negative active material | Mass per unit area of positive active material layer (mg/cm²) | Mass per unit area of negative active material layer (mg/cm²) | CB | Charge cutoff voltage U(V) | Relational expression 1 100*(4.5-U) -10*(CB-1) | Relational expression 2: CB/U | 500th-cycle capacity retention rate | 500th-cycle expansion rate |
|---|---|---|---|---|---|---|---|---|---|---|
| Embodiment 13 | SiC+graphite | 80% | 19.865 | 2.844 | 1.1 | 4.45 | 4.0 | 0.25 | 70% | 11.5% |
| Embodiment 14 | SiC+graphite | 80% | 19.865 | 3.361 | 1.3 | 4.42 | 5.0 | 0.29 | 80% | 9% |
| Embodiment 15 | SiC+graphite | 80% | 19.865 | 3.878 | 1.5 | 4.40 | 5.0 | 0.34 | 81% | 8% |

As can be seen from comparison between Embodiments 13 to 15, the CB value is adjusted by changing the mass per unit area of the negative active material layer. With the increase of the CB and the decrease of the charge cutoff voltage U, with respect to the same negative active material SiC+graphite, the cycle capacity retention rate of the lithium-ion battery shows a tendency to increase, and the cycle expansion rate shows a tendency to decrease.

Table 4 shows parameters and evaluation results in Embodiments 16 to 20. In Embodiments 16 to 20, the positive active material is a nickel-cobalt-manganese material (the molar ratio of nickel: cobalt: manganese is 6: 2: 2), with the gram capacity of 174 mAh/g; and the negative active material is a mechanically mixed specimen that combines SiO of 80% by mass and graphite of 20% by mass, with the charging gram capacity of 1307 mAh/g.

**Table 4**

| | Negative active material | Mass percent of silicon material in negative active material | Mass per unit area of positive active material layer (mg/cm$^2$) | Mass per unit area of negative active material layer (mg/cm$^2$) | CB | Charge cutoff voltage U(V) | Relational expression 1 100*(4.5-U)-10*(CB-1) | Relational expression 2: CB/U | 500$^{th}$-cycle capacity retention rate | 500$^{th}$-cycle expansion rate |
|---|---|---|---|---|---|---|---|---|---|---|
| Embodiment 16 | SiO+graphite | 80% | 19.54 | 3.44 | 1.3 | 4.45 | 2 | 0.29 | 57% | 16.5% |
| Embodiment 17 | SiO+graphite | 80% | 19.54 | 3.73 | 1.3 | 4.43 | 4 | 0.29 | 75% | 11.5% |
| Embodiment 18 | SiO+graphite | 80% | 19.54 | 4.30 | 1.5 | 4.35 | 10 | 0.34 | 80% | 10% |
| Embodiment 19 | SiO+graphite | 80% | 19.54 | 5.30 | 1.8 | 4.30 | 12 | 0.42 | 84% | 9% |
| Embodiment 20 | SiO+graphite | 80% | 19.54 | 5.73 | 2.0 | 4.18 | 22 | 0.48 | 88% | 8% |

As can be seen from comparison between Embodiments 16 to 20, in a ternary material (nickel cobalt manganese) system, in the case of $4 \leq 100 \times (4.5 - U) - 10 \times (CB - 1) \leq 22$, in contrast with the case of $100 \times (4.5 - U) - 10 \times (CB - 1) = 1$, the CB value is adjusted by changing the mass per unit area of the negative active material layer. The charge cutoff voltage U is decreased while the CB is increased. That is, the ratio of CB to U increases. With respect to the same negative active material SiO, the cycle capacity retention rate of the lithium-ion battery increases gradually, and the cycle expansion rate decreases gradually.

What is described above is merely exemplary embodiments of this application and the technical principles thereof. A person skilled in the art understands that the scope of disclosure in this application is not limited to the technical solutions formed by a specific combination of the foregoing technical features, but also covers other technical solutions formed by arbitrarily combining the foregoing technical features or equivalents thereof, for example, a technical solution formed by replacing any of the foregoing features with a technical feature disclosed herein and serving similar functions.

## Claims

1. An electrochemical device, comprising:

    a positive electrode plate, comprising a positive current collector and a positive active material layer disposed on the positive current collector, wherein the positive active material layer comprises a positive active material, and the positive active material comprises lithium cobalt oxide;
    a negative electrode plate, comprising a negative current collector and a negative active material layer disposed on the negative current collector, wherein the negative active material layer comprises a negative active material; and
    a separator, disposed between the positive electrode plate and the negative electrode plate,
    wherein, the electrochemical device satisfies the following relational expressions:

$$3 \leq 100 \times (4.5 - U) - 10 \times (CB - 1) \leq 10;$$

    and

$$CB = (A' \times B' \times C')/(A \times B \times C),$$

    wherein, A is a percentage of a mass of the positive active material in a total mass of the positive active material layer, B is a gram capacity of the positive active material and measured in mAh/g, C is a mass per unit area of the positive active material layer and measured in mg/cm$^2$, A' is a percentage of a mass of the negative active material in a total mass of the negative active material layer, B' is a gram capacity of the negative active material and measured in mAh/g, C' is a mass per unit area of the negative active material layer and measured in mg/cm$^2$, and U is a charge cutoff voltage of the electrochemical device and measured in V.

2. The electrochemical device according to claim 1, wherein, $3.5 \leq 100 \times (4.5 - U) - 10 \times (CB - 1) \leq 6$.

3. The electrochemical device according to claim 1 or 2, wherein, $1.04 \leq CB \leq 2.0, 4.3 \leq U < 4.5$.

4. The electrochemical device according to claim 1, wherein, $0.17 < CB/U < 0.48$.

5. The electrochemical device according to claim 1, wherein the negative active material comprises at least one of $SiO_x$, silicon alloy, or a silicon-carbon composite, wherein $0.3 \leq x \leq 1.5$.

6. The electrochemical device according to claim 1, wherein the electrochemical device further comprises a conductive layer disposed between the negative current collector and the negative active material layer, and the conductive layer comprises a conductive agent and a binder.

7. The electrochemical device according to claim 6, wherein the conductive agent comprises at least one of carbon black, acetylene black, Ketjen black, graphene, carbon nanotubes, carbon fiber, or carbon nanowires.

8. An electrochemical device, comprising:

a positive electrode plate, comprising a positive current collector and a positive active material layer disposed on the positive current collector, wherein the positive active material layer comprises a positive active material, and the positive active material comprises at least one of lithium nickel cobalt manganese oxide or lithium nickel cobalt aluminum oxide;

a negative electrode plate, comprising a negative current collector and a negative active material layer disposed on the negative current collector, wherein the negative active material layer comprises a negative active material; and

a separator, disposed between the positive electrode plate and the negative electrode plate,

wherein, the electrochemical device satisfies the following relational expressions:

$$4 \leq 100 \times (4.49 - U) - 10 \times (CB - 1) \leq 22;$$

and

$$CB = (A' \times B' \times C')/(A \times B \times C),$$

wherein, A is a percentage of a mass of the positive active material in a total mass of the positive active material layer, B is a gram capacity of the positive active material and measured in mAh/g, C is a mass per unit area of the positive active material layer and measured in mg/cm$^2$, A' is a percentage of a mass of the negative active material in a total mass of the negative active material layer, B' is a gram capacity of the negative active material and measured in mAh/g, C' is a mass per unit area of the negative active material layer and measured in mg/cm$^2$, and U is a charge cutoff voltage of the electrochemical device and measured in V.

9. The electrochemical device according to claim 8, wherein, $5 \leq 100 \times (4.49 - U) - 10 \times (CB - 1) \leq 13$.

10. The electrochemical device according to claim 8 or 9, wherein, $1.04 \leq CB \leq 2.0, 4.1 \leq U < 4.49$.

11. The electrochemical device according to claim 8, wherein, $0.17 < CB/U < 0.48$.

12. The electrochemical device according to claim 8, wherein the negative active material comprises at least one of $SiO_x$, silicon alloy, or a silicon-carbon composite, wherein $0.3 \leq x \leq 1.5$.

13. The electrochemical device according to claim 8, wherein the electrochemical device further comprises a conductive layer disposed between the negative current collector and the negative active material layer, and the conductive layer comprises a conductive agent and a binder.

14. The electrochemical device according to claim 13, wherein the conductive agent comprises at least one of carbon black, acetylene black, Ketjen black, graphene, carbon nanotubes, carbon fiber, or carbon nanowires.

15. An electronic device, comprising the electrochemical device according to any one of claims 1 to 14.

## INTERNATIONAL SEARCH REPORT

| International application No. |
| --- |
| **PCT/CN2021/083042** |

| **A.** | **CLASSIFICATION OF SUBJECT MATTER** |
| --- | --- |

H01M 10/0525(2010.01)i; H01M 4/525(2010.01)i; H01M 4/02(2006.01)i

According to International Patent Classification (IPC) or to both national classification and IPC

| **B.** | **FIELDS SEARCHED** |
| --- | --- |

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

CNABS, CNKI, CNTXT, DWPI, SIPOABS: 比容量, 克容量, 面密度, 单位密度, 涂, 密度, 正极, 负极, 容量比, specific capacity, gram capacity, areal density, unit density, coating, density, positive electrode, negative electrode, capacity ratio

| **C.** | **DOCUMENTS CONSIDERED TO BE RELEVANT** |
| --- | --- |

| Category* | Citation of document, with indication, where appropriate, of the relevant passages | Relevant to claim No. |
| --- | --- | --- |
| X | CN 104577194 A (TONGXIANG ZHONGSHENG ENERGY TECHNOLOGY CO., LTD.) 29 April 2015 (2015-04-29) description, paragraphs [0006]-[0025], embodiment 4 | 1-7, 15 |
| X | CN 110993933 A (ZHAOQING AOYOU POWER BATTERY CO., LTD.) 10 April 2020 (2020-04-10) description paragraphs [0004]-[0045], figure 2 | 8, 11-15 |
| Y | CN 110993933 A (ZHAOQING AOYOU POWER BATTERY CO., LTD.) 10 April 2020 (2020-04-10) description paragraphs [0004]-[0045], figure 2 | 9, 10, 15 |
| Y | CN 111403801 A (FUNENG TECHNOLOGY (GANZHOU) CO., LTD.) 10 July 2020 (2020-07-10) description, paragraphs [0008]-[0195], embodiments 5-8 | 9, 10, 15 |
| A | CN 104900908 A (TIAN, Dong) 09 September 2015 (2015-09-09) entire document | 1-15 |
| A | WO 2020121288 A1 (TERAWATT TECH INC) 18 June 2020 (2020-06-18) entire document | 1-15 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **01 December 2021** | **14 December 2021** |

| Name and mailing address of the ISA/CN | Authorized officer |
| --- | --- |
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2021/083042**

| Patent document cited in search report | | | Publication date (day/month/year) | Patent family member(s) | | | Publication date (day/month/year) |
|---|---|---|---|---|---|---|---|
| CN | 104577194 | A | 29 April 2015 | None | | | |
| CN | 110993933 | A | 10 April 2020 | None | | | |
| CN | 111403801 | A | 10 July 2020 | None | | | |
| CN | 104900908 | A | 09 September 2015 | WO | 2016201942 | A1 | 22 December 2016 |
| WO | 2020121288 | A1 | 18 June 2020 | US | 2020194749 | A1 | 18 June 2020 |
| | | | | WO | 2020121288 | A8 | 30 July 2020 |

Form PCT/ISA/210 (patent family annex) (January 2015)